Europäisches Patentamt

European Patent Office

Office européen des brevets

(19)

(11) Veröffentlichungsnummer: **0 046 573**
**B1**

(12) # EUROPÄISCHE PATENTSCHRIFT

(45) Veröffentlichungstag der Patentschrift:
**19.02.86**

(51) Int. Cl.⁴: **C 09 C 3/04**

(21) Anmeldenummer: **81106480.7**

(22) Anmeldetag: **20.08.81**

(54) **Mahlhilfsmittel zur Vermahlung von groben Mineralien in wässriger Lösung.**

(30) Priorität: **21.08.80 FR 8018474**

(43) Veröffentlichungstag der Anmeldung:
**03.03.82 Patentblatt 82/9**

(45) Bekanntmachung des Hinweises auf die Patenterteilung:
**19.02.86 Patentblatt 86/8**

(84) Benannte Vertragsstaaten:
**AT BE CH DE GB IT LI LU NL SE**

(56) Entgegenhaltungen:
**FR - A - 1 506 724**
**FR - A - 2 323 435**
**GB - A - 1 414 964**
**US - A - 3 604 634**
**US - A - 4 124 562**
**US - H - 3 839 405**

(73) Patentinhaber: **Société COATEX, Société Anonyme,
35 Cours Aristide Briand, F-69300 Caluire (FR)**

(72) Erfinder: **Hautier, Gabriel, Mpale Tree Av. 15, Stamford
Connecticut 06906 (US)**

(74) Vertreter: **Reinhard, Skuhra, Weise, Leopoldstrasse 51,
D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Mahlhilfsmittel zur Vermahlung von groben Mineralien in wässriger Lösung in Form von neutralisierten Acrylsäure-, Itaconsäure-, Maleinsäure- oder Fumarsäure-Polymeren und/oder Copolymeren und ein Mahlverfahren unter Verwendung des Mahlhilfsmittels.

Es ist seit langer Zeit bekannt, dass mineralische Substanzen, wie Calciumcarbonat, Calciumsilicat und Calciumsulfat sowie auch Titandioxid bei der Herstellung von Farben, Streichpapieren, Füllstoffen für Gummi und synthetische Harze, etc., Verwendung finden.

Da jedoch die natürliche Struktur dieser Mineralien nicht geschichtet oder lamellar ist, was ihre Zerkleinerung erleichtern würde, wie es z.B. bei gewissen Substanzen wie Aluminiumsilicaten bzw. Kaolinen der Fall ist, müssen diese Mineralien zur Verwendung als Pigmente in eine sehr feine wässrige Suspension vermahlen werden, wobei die Korngrösse kleiner als wenige Mikron sein muss.

Schon die grosse Anzahl der Publikationen auf diesem Gebiet zeigt, wie wichtig und komplex das Vermahlen von Mineralien im wässrigen Medium ist, mit dem Ziel, feinvermahlene Partikel zur Anwendung als Pigmente zu erhalten.

Auch auf dem Gebiet der Papierbeschichtung ist es seit langem bekannt, dass die Beschichtungsmasse mineralische Pigmente wie Kaoline, Karbonate, Kalcium-Sulfate und Titandioxide in wässriger Suspension enthält, wobei gleichzeitig Bindemittel, Dispersionsmittel und andere Zusätze wie Eindicker und Farben verwendet werden. Es ist wünschenswert, dass die Viskosität einer derartigen Beschichtungsmasse niedrig und während des Beschichtungsvorganges stabil ist, so dass ihre Handhabung und Aufbringung erleichtert wird. Andererseits ist es aber auch wünschenswert, dass die Beschichtungsmasse den höchstmöglichen Mineralgehalt besitzt, um die Energiemenge zu reduzieren, die zur Trocknung der wässrigen Fraktion der Beschichtungsmasse erforderlich ist. Eine Suspension, die diese beiden fundamentalen Voraussetzungen erfüllen würde, wäre eine ideale Suspension und würde die seit langem bekannten Probleme bezüglich des Vermahlens, Aufbewahrens, Transportierens vom Hersteller zum Anwender und des Transports durch Pumpen während der Anwendung lösen.

Die bisher bekannten Mahlverfahren in wässrigem Medium führten zu Suspensionen, die mit der Zeit instabil wurden, da die Mineralien der Sedimentation unterlagen und sich die Viskosität erhöhte. Deshalb ging man dazu über, die Vermahlung in wässriger Suspension in einem oder mehreren Verfahrensschritten durchzuführen, zu trocknen und das vermahlene Gut durch Eliminierung der unbrauchbaren Partikel zu klassieren und die brauchbaren Partikel mit der gewünschten Korngrösse abzutrennen, um so ein Produkt hoher Feinheit mit niedrigem Wassergehalt zu erhalten. Das feine Produkt konnte dann ohne weiteres vom Hersteller zum Anwender transportiert werden, wo es erneut in wässrige Suspension gebracht wurde.

Die Tatsache, dass mineralische Pigmente nicht vom Hersteller zum Anwender in wässriger Suspension gehalten werden konnten, gab Anlass zu vielfältigen Forschungsarbeiten auf diesem Gebiet; man versuchte, Mahlverfahren zu finden, die zu einem Endprodukt mit einer Viskosität führen würden, die niedrig und über längere Zeit stabil bleiben würde. So wurde z.B. in der FR-PS 1 506 724 ein Mahlverfahren vorgeschlagen, bei welchem eine wässrige Suspension von Kalciumkarbonat über längere Zeit stabil sein sollte; dieses Verfahren ist dadurch gekennzeichnet, dass durch Rühren eine wässrige Suspension mit 25 bis 50 Gew.% an Kalciumkarbonat hergestellt wird und dass das wässrige Material mit geeigneten Mahlkörpern in Gegenwart von Dispersionsmitteln vermahlen wird. Das Dispersionsmittel ist ein wasserlösliches Acrylsäure-Polymerisat, das dem Mahlmedium in einer Menge von 0,2 bis 0,4 Gew.%, bezogen auf das Kalciumkarbonat, zugegeben wird. Obwohl die Pigmentsuspension den unleugbaren Vorteil einer guten Stabilität über längere Zeit besitzt, weist sie noch erhebliche Nachteile auf. Dies trifft z.B. für den Gehalt an trockenem Material der zu vermahlenden Suspension zu, da dieser unbedingt zwischen 25 und 50 Gew.%, vorzugsweise bei ca. 40 Gew.%, liegen muss. Wenn diese Konzentration unter 25 Gew.% abfällt, ist das Verfahren wirtschaftlich nicht mehr interessant; wenn dagegen die ursprüngliche Konzentration an trockenem Material über 50 Gew.% liegt, wird die Ausbeute reduziert, da sich die Viskosität des Mediums beträchtlich erhöht, wodurch nur grobe Korngrössen erhalten werden. Wenn also die Konzentration an trockenem Material in der Suspension zwischen 25 und 50 Gew.% gewählt wird, wird eine durchaus befriedigende Korngrössenverteilung, bei welcher 95% der Partikel eine Korngrösse von kleiner als 2 μm haben, erhalten, allerdings nach einer sehr langen Vermahlungszeit.

Man musste also nach einem neuen Verfahren suchen, da der plötzliche Anstieg der Viskosität einen daran hinderte, eine wässrige Suspension mit mehr als 50 Gew.% an Feststoffkonzentration zu vermahlen. Es wurden Verfahren vorgeschlagen, bei welchen einfach sehr trockene Mineralien in Suspension gebracht wurden, ohne eine Vermahlung vorzusehen. So betrifft z.B. die FR-PS 1 562 326 ein Verfahren zur Herstellung einer wässrigen Suspension von mineralischen Substanzen. Die Aufgabe dieses Verfahrens ist es, eine wässrige Suspension hoher Konzentration an trockenem Material zu erhalten, die gleichzeitig genügend stabil auf dem Transport vom Hersteller zum Anwender ist. Dieses Verfahren ist dadurch gekennzeichnet, dass eine wässrige Suspension von Mineralien hergestellt wird, die 70 bis 85 Gew.% an trockenem Material enthält, wobei wenigstens 99 Gew.% der ursprünglichen Partikel eine Partikelgrösse von weniger als 50 μm aufweisen und dass die Suspension dann in Gegenwart von Dispersionsmitteln wie Natrium- oder Kaliumsalze der Phosphorsäure, Polyacrylsäure, Polykieselsäure, etc., in einer Menge von 0,05 bis 0,5 Gew.%, bezogen auf das trockene Material, gerührt wird. Dabei wird darauf hingewiesen, dass der Gehalt an trockenem Material in der Suspension nicht höher als 85 Gew.% wegen des steilen Anstiegs der Viskosität sein sollte und andererseits aber nicht weniger als 70 Gew.% haben sollte, wegen der Gefahr der Sedimentation.

Nach dem Stande der Technik gibt es also grundsätzlich zwei Vorschläge zur Lösung der gestellten Probleme:

Der eine Vorschlag betrifft das Vermahlen einer wässrigen Suspension eines Minerals in der Gegenwart eines Dispersionsmittels; dabei wird keine befriedigende Konzentration an trockenem Material erreicht, obwohl dieser Vorschlag den Vorteil aufweist, dass eine sehr feine Suspension niedriger Viskosität erhalten wird, bei welcher bis zu 95 Gew.% der Partikel kleiner als 2 μm sind.

Der andere Vorschlag betrifft die Herstellung einer wässrigen Suspension mit einem hohen Gehalt an trockenem Material, und zwar von 70 bis 85 Gew.%, wobei 99 Gew.% der ursprünglichen Partikel kleiner oder gleich 50 μm sind. Dabei wird ein Dispersionsmittel zugesetzt, um die Partikel zu stabilisieren. Dieser Vorschlag führt zwar zu einer Suspension mit niedriger Viskosität, er konnte sich jedoch in der Praxis nicht durchsetzen, da die Partikel zu grob und in der Grösse zu unregelmässig sind, um als Pigmente Verwendung finden zu können.

Eine Aufgabe der vorliegenden Erfindung ist es daher, ein Mahlhilfsmittel zur Vermahlung von Mineralien in wässriger Lösung bereitzustellen, mit welchem eine Pigmentsuspension ohne die vorstehend geschilderten Nachteile erhalten werden kann, d.h., mit welcher eine Suspension erhalten werden kann, die einen sehr hohen Gehalt an Feststoffen bei gleichzeitig hervorragenden Viskositätseigenschaften aufweist.

Diese Aufgabe wird erfindungsgemäss dadurch gelöst, dass das Mahlhilfsmittel aus der Polymer- bzw. Copolymer-Fraktion mit einer spezifischen Viskosität im Bereich von 0,3 bis 0,8 besteht, die nach beendeter Polymerisation und Neutralisation in wässrigem Medium dadurch abgetrennt wird, dass ein polares Lösungsmittel zur wässrigen Lösung zugegeben wird, wodurch sich die Lösung in zwei Phasen teilt, die weniger dichte Phase, die den Hauptanteil des polaren Lösungsmittels und die unerwünschten Acrylpolymer- und/oder Copolymer-Fraktionen enthält, abgetrennt wird und die dichteste wässrige Phase, die die gewünschte Fraktion mit der spezifischen Viskosität von 0,3 bis 0,8 enthält, gesammelt wird.

Mit dem erfindungsgemässen Mahlverfahren unter Verwendung dieses Mahlhilfsmittels können wässrige Suspensionen mit wenigstens 70 Gew.% Feststoffgehalt hergestellt werden, wobei die ursprüngliche Partikelgrösse der Mineralien bis zu 50 μm beträgt.

Mahlhilfsmittel zur Vermahlung von groben Mineralien in wässriger Lösung in Form von alkalischen Acrylsäurederivaten sind bereits bekannt. Zu ihrer Herstellung wird üblicherweise zunächst gemäss an sich bekannten Methoden Acrylsäure polymerisiert und die erhaltene wässrige Lösung der Polymerisate mittels Natriumhydroxyd neutralisiert. Aus der GB-A-1 414 964 ist es bekannt, dass sich eine Verengung der Molekulargewichtsverteilung günstig für die Verringerung der Viskosität und die Stabilität der Suspension auswirkt (Beispiel Ziffer 9 in Verbindung mit Ziffer 3). Nach dieser Druckschrift wird die günstige Molekulargewichtsverteilung offensichtlich unter dem Einfluss des unpolaren Lösungsmittels Xylol erreicht, welches das zur Auflösung der wässrigen Benzoylperoxidsuspension verwendete polare Aceton ersetzt und wobei das in dieser Suspension enthaltene Wasser entfernt werden (Beispiel 3).

Die Anmelderin hatte sich die Aufgabe gestellt, ein Mahlhilfsmittel zu schaffen, das bei Suspensionen mit wenigstens 50 Gew.% an trockenem Material eingesetzt werden kann, da dieser Prozentgehalt nach dem Stande der Technik als die oberste Grenze betrachtet wurde, die nicht überschritten werden durfte. Dabei stellte sich allerdings heraus, dass eine Suspension mit einer extrem hohen Viskosität erhalten wurde, mit der Folge, dass eine Vermahlung unter wirtschaftlichen Bedingungen nicht mehr möglich war.

Nach der Durchführung umfangreicher Reihenversuche mit den unterschiedlichsten wässrigen Suspensionen mit hohem Feststoffgehalt wurde überraschend gefunden, dass die Probleme dadurch gelöst werden können, dass die Polymer- bzw. Copolymer-Fraktion mit einer spezifischen Viskosität im Bereich von 0,3 bis 0,8 eingesetzt wird. Das erfindungsgemässe Mahlhilfsmittel wird erfindungsgemäss dadurch hergestellt, dass zunächst gemäss an sich bekannten Methoden Acrylsäure, Methacrylsäure, Itaconsäure, Maleinsäure bzw. Fumarsäure polymerisiert bzw. copolymerisiert werden und dass die erhaltene wässrige Lösung der Polymerisate mittels geeigneter Verbindungen neutralisiert wird. Geeignet sind Natrium-, Kalium-, Ammonium-, Zink- oder Calcium-Hydroxide oder auch primäre, sekundäre oder tertiäre Amine, und zwar sowohl aliphatische als auch aromatische, wie z.B. Ethanolamine (Mono-di-tri-Ethanolamine), Monodiethylamine, Cyclohexylamine, Methylcyclohexylamine, etc.

Die wässrige Lösung des neutralisierten Polymerisats wird dann in an sich bekannter Weise mit polaren Lösungsmitteln behandelt. Als polare Lösungsmittel kommen in Frage Methanol, Ethanol, Propanol, Isopropanol, Aceton oder Tetrahydrofuran. Die Lösung teilt sich dann in zwei Phasen. Die weniger dichte Phase, die den Hauptteil des polaren Lösungsmittels und die unerwünschten Acrylpolymer- und/oder Copolymer-Fraktionen enthält, wird abgetrennt, während die dichteste wässrige Phase, die die gewünschte Fraktion mit der spezifischen Viskosität von 0,3 bis 0,8 enthält, gesammelt wird.

Es kann in bestimmten Fällen wünschenswert sein, die Polymer- und/oder Copolymer-Fraktion nochmals aufzubereiten, und zwar dadurch, dass die gesammelten dichtesten Phasen erneut mit einer weiteren Menge an polaren Lösungsmitteln behandelt werden, die sich vorzugsweise von dem ursprünglich verwendeten polaren Lösungsmittel unterscheiden, oder auch Mischungen der genannten polaren Lösungsmittel darstellen. Es treten erneut zwei Phasen auf, von welchen die dichtere, d.h. die wässrige Phase, wieder gesammelt wird. Diese enthält eine Fraktion mit einer spezifischen Viskosität in einem engeren Bereich. Vorzugsweise wird die Fraktion mit einer spezifischen Viskosität in einem Bereich von 0,35 bis 0,60 verwendet.

Die erhaltene wässrige Phase mit der alkalischen Acrylpolymer- bzw. Copolymer-Fraktion mit einer spezifischen Viskosität im Bereich von 0,3 bis 0,8 kann als solche als Mahlhilfsmittel für mineralische Substanzen verwendet werden, doch kann sie auch nach an sich bekannten Verfahren von dem Wasser befreit und in Form eines feinen Pulvers isoliert werden, welches dann in dieser Form als Mahlhilfsmittel eingesetzt werden kann.

Die Temperatur, bei welcher die Selektion ausgeführt wird, ist nicht kritisch, da sie nur das Konzentrationsverhältnis bzw. den Verteilungskoeffizienten beeinflusst. In der Praxis wird daher der Selektionsprozess bei Zimmertemperatur durchgeführt, doch können ebenfalls höhere Temperaturen angewendet werden.

Die spezifische Viskosität der Acryl-Polymeren und/oder Copolymeren, symbolisiert durch den Buchstaben «η» wird wie folgt bestimmt:

Eine alkalische Acrylsäure-Polymer- und/oder Copolymer-Lösung wird dadurch hergestellt, dass 50 g trockenes Polymerisat und/oder Copolymerisat in einem Liter einer NaCl-Lösung aufgelöst werden, die aus 60 g NaCl und destilliertem Wasser bereitet wurde. Dann wird ein Kapillar-Viskosimeter mit einer Baum-Konstante von 0,000105 in das Bad gebracht, das thermostatisch geregelt bei 25 °C gehalten wird. Das Viskosimeter dient zur Messung der Fliesszeit eines vorgegebenen Volumens der oben beschriebenen Lösung, die das alkalische Acryl-Polymerisat und/oder Copolymerisat enthält sowie der Fliesszeit des gleichen Volumens an der Natriumchloridlösung ohne das genannte Polymerisat und/oder Copolymerisat. Die Viskosität «η» kann dann durch folgende Formel definiert werden:

$$\eta = \frac{\text{(Fliesszeit der Polymerlösung)} - \text{(Fliesszeit der NaCl-Lösung)}}{\text{Fliesszeit der NaCl-Lösung}}$$

Das Kapillarrohr wird im allgemeinen so gewählt, dass die Fliesszeit der Natriumchlorid-Lösung ohne das Polymerisat und/oder Copolymerisat annähernd 90 bis 100 Sekunden beträgt; auf diese Weise werden sehr präzise Messwerte für die spezifische Viskosität erhalten.

Nachdem die Fraktion der alkalischen Acrylsäure-Polymerisate und/oder Copolymerisate mit einer spezifischen Viskosität von 0,3 bis 0,8 isoliert ist, wird das zu vermahlende Mineral mittels Mahlkörper zu sehr feinen Partikeln in wässrigem Medium, das das Mahlhilfsmittel enthält, vermahlen.

In der Praxis wird von einer wässrigen Suspension ausgegangen, die Partikel mit einer Anfangsgrösse von höchstens 50 Mikron enthält und die eine Konzentration an trockenem Material von wenigstens 70 Gew.% aufweist.

Die Mahlkörper mit einer Korngrösse von vorzugsweise 0,20 bis 4 mm werden zu der zu vermahlenden Mineral-Suspension zugegeben. Die Mahlkörper bestehen vorzugsweise aus Silizium-Oxid, Aluminium-Oxid, Zirkon-Oxid oder ihren Mischungen, synthetischen Harzen hoher Härte, Stählen etc. In der FR-PS 2 203 681 ist ein Beispiel für die Zusammensetzung derartiger Mahlkörper gegeben. Diese FR-PS beschreibt Mahlkörper, die aus 30 bis 70 Gew.% Zirkon-Oxid, 0,1 bis 5 Gew.% Aluminium-Oxid und 5 bis 20 Gew.% Siliziumoxid bestehen. Vorzugsweise beträgt das Gewichtsverhältnis zwischen den Mahlkörpern und den zu vermahlenden Mineralien wenigstens 2 : 1, am besten 3 : 1 bis 5 : 1.

Die Mischung aus der Suspension und den Mahlkörpern wird dann mechanisch gerührt, wie dies z.B. in den klassischen Mikroelement-Mühlen der Fall ist.

Das erfindungsgemässe Mahlhilfsmittel in Form der trockenen Polymer-Fraktion wird der Suspension vorzugsweise in einem Verhältnis von 0,2 bis 2 Gew.%, bezogen auf die Menge der zu vermahlenden Mineralien, zugesetzt.

Die Vermahlungszeit hängt ab von der Natur und Menge der zu vermahlenden Mineralien, von der Mahlmethode und von der Temperatur des Mediums während der Vermahlung.

Das erfindungsgemässe Mahlhilfsmittel und das erfindungsgemässe Mahlverfahren können zur Vermahlung der unterschiedlichsten mineralischen Substanzen verwendet werden, wie z.B. Kalciumkarbonat, Dolomit, Kalciumsulfat, Kaolin, Titandioxid, d.h., es können alle mineralischen Substanzen vermahlen werden, die in Papierbeschichtungen, in Farben und Lacken, Gummi oder synthetischen Harzen, beim Dulling von synthetischen Textilien etc., Verwendung finden.

Das erfindungsgemässe Mahlhilfsmittel ist also bestens dafür geeignet, grobes Material zu sehr feinen Partikeln zu vermahlen, welche zu 95% aus Partikeln mit einer Partikelgrösse von weniger als 2 μm und zu 75% aus Partikeln mit einer Partikelgrösse von weniger als 1 μm bestehen. Mit dem erfindungsgemässen Mahlhilfsmittel und dem erfindungsgemässen Mahlverfahren ist es nunmehr möglich geworden, Suspensionen mit sehr feinen Mineralsubstanzen herzustellen, deren Viskosität niedrig und über lange Zeit stabil ist.

Im folgenden wird die Erfindung anhand von nicht beschränkenden Ausführungsbeispielen näher erläutert:

Beispiel 1:

Dieses Beispiel wurde nach dem Stande der Technik durchgeführt und betrifft das Vermahlen von Kalciumkarbonat in Gegenwart von Natriumpolyacrylat als Mahlhilfsmittel, das durch Polymerisation von Acrylsäure in Gegenwart von Initiatoren und Regulatoren in an sich bekannter Weise erhalten wurde.

Test 1 besteht im Mahlen von Kalciumkarbonat in Gegenwart von Natriumpolyacrylat, erhalten durch radikalische Polymerisation von Acrylsäure in Wasser und anschliessendes Neutralisieren mit Natriumhydroxid.

Test 2 besteht in der Vermahlung von Kalciumkarbonat in Gegenwart von Natriumpolyacrylat, erhalten durch radikalische Polymerisation von Acrylsäure im wässrigen Medium, in Gegenwart von Isopropanol, sowie anschliessendem Destillieren des Alkohols und Neutralisieren des Polymerisats mit Natriumhydroxid.

Beide Tests wurden mit den gleichen experimentellen Parametern durchgeführt; die Vermahlung erfolgte in der gleichen Vorrichtung, so dass die Resultate ohne weiteres verglichen werden können.

Für jeden Test wurde eine wässrige Suspension von Kalciumkarbonat aus Orgon Iode (Frankreich) mit einer Korngrösse von weniger als 43 μm vorbereitet.

Die Konzentration an trockenem Material in der wässrigen Suspension betrug 76 Gew.%, bezogen auf die Gesamtmasse.

Das Mahlhilfsmittel wurde der Suspension in Mengen wie aus folgender Tabelle 1 ersichtlich, zugesetzt, wobei sich die Mengen auf Gew.%, bezogen auf die Menge des zu vermahlenden Kalciumkarbonats, beziehen.

Die Suspension wurde in eine Mühle vom Typ Dyno-Mill, mit feststehendem Zylinder und rotierendem Schaufelrad, gebracht; die Mahlkörper bestanden aus Korund-Kugeln von 0,5 bis 2,0 mm Durchmesser.

Die Mahlkörper besassen ein Gesamtvolumen von 500 cm³; ihr Gewicht betrug 1230 g.

Das Volumen der Mahlkammer betrug 2500 cm³.

Die periphere Geschwindigkeit der Mühle betrug 10 m/sek.

Die Kalciumkarbonat-Suspension wurde mit einer Geschwindigkeit von 15 l/h recycled.

Der Ausgang der Mühle war mit einem 300-μm-Mesh-Separator ausgerüstet, mit welchem die resultierende Suspension von den Mahlkörpern abgetrennt wurde.

Die Temperatur wurde bei jedem Mahltest bei 65°C gehalten.

Die Vermahlungszeit betrug unter den vorstehenden experimentellen Bedingungen 90 bis 104 Minuten und entsprach der Zeit, die zur Erzielung eines vermahlenen Materials mit 75% an Partikeln kleiner als 1 μm erforderlich war.

Nach der Vermahlung wurde die Viskosität der Pigmentsuspension mit einem Brookfield-Viskosimeter bei einer Temperatur von 20°C und einer Rotationsgeschwindigkeit von 100 Upm mit dem Mobile Nr. 3 gemessen.

Nach einer Aufbewahrungszeit von einmal 24 Stunden und zum anderen acht Tagen wurde die Viskosität der Suspension nach kurzem Aufrühren erneut gemessen. Alle Resultate der durchgeführten Experimente sind in der folgenden Tabelle 1 zusammengestellt.

| TABELLE 1 | TEST 1 | TEST 2 |
|---|---|---|
| Zu vermahlende mineralische Substanz | CaCO₃ (Urgonit) | CaCO₃ (Urgonit) |
| Konzentration an trockenem Material in der zu vermahlenden Suspension | 76% | 76% |
| Mahlhilfsmittel | Natrium-Polyacrylat | Natrium-Polyacrylat |
| Polymerisationsmedium | Wasser | Wasser und Isopropanol |
| Spezifische Viskosität des Mahlhilfsmittels | 0,5 | 0,35 |
| Verbrauch an Mahlhilfsmittel in Gew.-% trocken/trocken | 0,97 | 1,08 |
| pH des Mahlmediums | 9,7 | 9,6 |
| % an mineralischen Substanzen mit einem Korndurchmesser von 1 μm nach der Vermahlung | 75 | 75 |
| Mahltemperatur | 65°C | 65°C |
| Viskosität in Pa·s bei 20°C | | |
| – nach der Vermahlung | 1,650 | 3,500 |
| – nach 24 Stunden Aufbewahrung und Aufrühren vor der Messung | 2,100 | 12,000 |
| – nach 8 Tagen Aufbewahrung und Aufrühren vor der Messung | 7,000 | 25,000 |

Die Tabelle zeigt, dass die Viskosität der Suspension nach der Vermahlung hoch ist, insbesondere in Test 2, und dass die Viskosität aber auch instabil über längere Zeit ist, und zwar unabhängig von ihrem ursprünglichen Wert, da sie beträchtlich ansteigt, wenn die Suspension aufbewahrt wird. Die Erhöhung ist sehr signifikant und gross in Test 2.

### Beispiel 2:

Dieses Beispiel, das die Erfindung näher erläutert, betrifft das Vermahlen des gleichen Kalciumkarbonats wie in Beispiel 1, und zwar in Gegenwart von Natriumpolyacrylat als Mahlhilfsmittel, erhalten durch Polymerisation von Acrylsäure wie in Beispiel 1, Test 1 und 2.

Im Test 3 wurde Kalciumkarbonat in Gegenwart von Natriumpolyacrylat, hergestellt wie in Beispiel 1, Test 1, vermahlen, d.h. durch radikalische Polymerisation von Acrylsäure in Wasser; das Polymerisat wurde dann mit Natrium-Hydroxid neutralisiert und mittels eines polaren Lösungsmittels in oben beschriebener Weise extrahiert, wobei eine Polymer-Fraktion mit einer spezifischen Viskosität im Bereich von 0,3 bis 0,8 erhalten wurde.

Im Test 4 wurde Kalciumkarbonat in Gegenwart von Natrium-Polyacrylat vermahlen, das wie in Beispiel 1, Test 2 hergestellt wurde, d.h., durch radikalische Polymerisation von Acrylsäure in wässrigem Medium in Gegenwart von Isopropanol. Das Polymerisat wurde dann durch Natrium-Hydroxid neutralisiert und wie oben beschrieben mittels eines polaren Lösungsmittels extrahiert, wobei auch hier eine Polymerfraktion mit einer spezifischen Viskosität im Bereich von 0,3 bis 0,8 erhalten wurde.

Nachdem die wässrige Lösung des Polymerisats neutralisiert war, wurde in Test 3 eine Probe von 80 g trockenem Polymerisat in 500 g Wasser genommen und mit 400 g Methanol gerührt. Nach Aufteilung in zwei Phasen durch Dekantation wurde die weniger dichte Phase, die den grössten Anteil des polaren Lösungsmittels und die unerwünschten Fraktionen der Acrylpolymerisate enthielt, eliminiert, während die dichtere Phase gesammelt wurde; diese enthielt die alkalische Acryl-Polymer-Fraktion mit den geschilderten hervorragenden Eigenschaften; ihre spezifische Viskosität wurde zu 0,525 gemessen.

In Test 4 wurde die wässrige Lösung des Polymerisats ebenfalls neutralisiert. Dann wurde eine Probe von 80 g trockenem Polymerisat in 400 g Wasser genommen. Dieses Volumen wurde mit 40 g Isopropanol gerührt. Nach der Trennung in zwei Phasen wurde die weniger dichte Phase mit den unerwünschten Acrylpolymerisat-Fraktionen eliminiert. Die dichteste Phase wurde gesammelt; sie enthielt die alkalische Acrylpolymerisat-Fraktion mit den geschilderten hervorragenden Eigenschaften; ihre spezifische Viskosität wurde zu 0,425 gemessen.

In den Tests 3 und 4 wurde eine wässrige Suspension von Kalciumkarbonat aus Orgon Iode (Frankreich) mit einer Korngrösse von weniger als 43 µm hergestellt.

Die Trockenmaterialkonzentration der wässrigen Suspension betrug 76 Gew.% bezogen auf die Gesamtmenge.

Das Mahlhilfsmittel wurde der Suspension in Mengen zugegeben, die sich aus Tabelle 2 ergeben, wobei sich die Angaben auf Gew.%, bezogen auf die Menge des zu vermahlenden Kalciumkarbonats, beziehen.

Die Suspension wurde in die gleiche Mühle wie in Beispiel 1 gegeben; es wurde die gleiche Menge an Mahlkörpern verwendet; es wurden die gleichen experimentellen Parameter angewendet, so dass die Ergebnisse der Beispiele 1 und 2 verglichen werden können.

Die Ergebnisse der Experimente sind in der folgenden Tabelle 2 dargestellt:

| TABELLE 2 | TEST 3 | TEST 4 |
|---|---|---|
| Zu vermahlende mineralische Substanz | CaCO₃ (Urgonit) | CaCO₃ (Urgonit) |
| Konzentration an trockenem Material in der zu vermahlenden Suspension | 76% | 76% |
| Mahlhilfsmittel | Natrium-Polyacrylat | Natrium-Polyacrylat |
| Spezifische Viskosität des Mahlhilfsmittels nach Extraktion mit: | 0,525 Methanol | 0,425 Isopropanol |
| Verbrauch an Mahlhilfsmittel in Gew.-% trocken/trocken | 0,83 | 0,63 |
| % an mineralischen Substanzen mit einem Korndurchmesser von 1 µm nach der Vermahlung | 75 | 75 |
| pH des Mahlmediums | 9,6 | 9,7 |
| Mahltemperatur | 65°C | 65°C |
| Viskosität in Pa·s bei 20°C | | |
| – nach der Vermahlung | 0,450 | 0,290 |
| – nach 24 Stunden Aufbewahrung und Aufrühren vor der Messung | 0,600 | 0,485 |
| – nach 8 Tagen Aufbewahrung und Aufrühren vor der Messung | 2,500 | 0,850 |
| Polymerisationsmedium | Wasser | Wasser und Isopropanol |

Vergleicht man die beiden Tabellen, so zeigt Tabelle 2 ein ausserordentlich starkes Absinken der Viskosität der Kalciumkarbonatsuspension, was auf die Verwendung des erfindungsgemässen Mahlhilfsmittels und auf das erfindungsgemässe Mahlverfahren zurückzuführen ist, d.h., insbesondere auf die Verwendung einer Polymer- bzw. Copolymer-Fraktion mit einer spezifischen Viskosität von 0,3 bis 0,8.

Tabelle 2 zeigt eine signifikante Verbesserung der Viskosität der Kalciumkarbonat-Suspension, wenn die Tests 1 und 3 sowie 2 und 4 verglichen werden, und zwar sowohl unmittelbar nach der Vermahlung als auch nach 24 Stunden bzw. acht Tagen Stehen.

Mit dem erfindungsgemässen Mahlhilfsmittel werden also erstmals Kalciumkarbonat-Suspensionen hoher Konzentration an trockenem Material und gleichzeitig sehr niedriger Viskosität und sehr stabiler Viskosität über längere Zeit erhalten.

## Patentansprüche

1. Mahlhilfsmittel zur Vermahlung von groben Mineralien in wässriger Lösung in Form von neutralisierten Acrylsäure-, Itaconsäure-, Maleinsäure- oder Fumarsäure-Polymeren und/oder Copolymeren, dadurch gekennzeichnet, dass es aus der Polymer- bzw. Copolymer-Fraktion mit einer spezifischen Viskosität im Bereich von 0,3 bis 0,8 besteht, die nach beendeter Polymerisation und Neutralisation in wässrigem Medium dadurch abgetrennt wird, dass ein polares Lösungsmittel zur wässrigen Lösung zugegeben wird, wodurch sich die Lösung in zwei Phasen teilt, die weniger dichte Phase, die den Hauptanteil des polaren Lösungsmittels und die unerwünschten Acrylpolymer- und/oder Copolymer-Fraktionen enthält, abgetrennt wird und die dichteste wässrige Phase, die die gewünschte Fraktion mit der spezifischen Viskosität von 0,3 bis 0,8 enthält, gesammelt wird.

2. Mahlhilfsmittel nach Anspruch 1, dadurch gekennzeichnet, dass es aus der Polymer- bzw. Copolymer-Fraktion mit einer spezifischen Viskosität im Bereich von 0,35 bis 0,60 besteht.

3. Mahlhilfsmittel nach Anspruch 1 oder 2, dadurch gekennzeichnet, dass es eine wässrige Lösung ist.

4. Mahlhilfsmittel nach Anspruch 1 oder 2, dadurch gekennzeichnet, dass es ein Pulver ist.

5. Mahlhilfsmittel nach einem der Ansprüche 1 bis 4, dadurch gekennzeichnet, dass als polares Lösungsmittel Methanol, Ethanol, Propanol, Isopropanol, Aceton und/oder Tetrahydrofuran verwendet wird.

6. Mahlverfahren unter Verwendung des Mahlhilfsmittels nach einem der Ansprüche 1 bis 5, dadurch gekennzeichnet, dass zunächst eine wässrige Suspension der Mineralien bereitet wird, dann das Mahlhilfsmittel und dann die Mahlkörper zugegeben werden und die Mineralien bis zur gewünschten Feinheit mechanisch vermahlen werden.

7. Mahlverfahren nach Anspruch 6, dadurch gekennzeichnet, dass die wässrige Suspension der zu vermahlenden Mineralien wenigstens zu 70 Gew.% aus trockenem Material besteht.

8. Mahlverfahren nach Anspruch 6 oder 7, dadurch gekennzeichnet, dass das Mahlhilfsmittel in Form der trockenen Polymer-Fraktion der Suspension in einem Verhältnis von 0,2 bis 2 Gew.% bezogen auf die Menge der zu vermahlenden Mineralien zugesetzt wird.

9. Mahlverfahren nach einem der Ansprüche 6 bis 8, dadurch gekennzeichnet, dass die Mahlkörper eine Korngrösse von 0,2 bis 4 mm aufweisen.

10. Mahlverfahren nach einem der Ansprüche 6 bis 9, dadurch gekennzeichnet, dass die Mahlkörper aus Siliziumoxid, Aluminiumoxid, Zirkonoxid oder ihren Mischungen, Stählen oder synthetischen Harzen hoher Härte bestehen.

11. Mahlverfahren nach einem der Ansprüche 6 bis 10, dadurch gekennzeichnet, dass das Gewichtsverhältnis zwischen den Mahlkörpern und den zu vermahlenden Mineralien wenigstens 2 : 1 beträgt.

12. Mahlverfahren nach einem der Ansprüche 6 bis 11, dadurch gekennzeichnet, dass das Gewichtsverhältnis zwischen den Mahlkörpern und den zu vermahlenden Mineralien zwischen 3 : 1 und 5 : 1 liegt.

13. Verwendung des Mahlhilfsmittels nach einem der Ansprüche 1 bis 5 zur Herstellung von Pigmenten.

## Claims

1. Grinding aid for grinding coarse minerals in an aqueous solution in the form of neutralised acrylic acid, itaconic acid, maleic acid or fumaric acid polymers and/or copolymers, characterised in that it consists of the polymer of copolymer fraction with a specific viscosity in the range from 0.3 to 0.8 which, upon completion of polymerisation and neutralisation in an aqueous medium, is separated off in that a polar solvent is added to the aqueous solution, so that the solution divides into two phases, the less dense phase which contains the major part of the polar solvent and the undesired acrylic polymer and/or copolymer fractions, being separated off while the most dense aqueous phase containing the desired fraction having the specific viscosity of 0.3 to 0.8 is collected.

2. Grinding aid according to Claim 1, characterised in that it consists of the polymer or copolymer fraction with a specific viscosity in the range from 0.35 to 0.60.

3. Grinding aid according to Claim 1 or 2, characterised in that it is an aqueous solution.

4. Grinding aid according to Claim 1 or 2, characterised in that it is a powder.

5. Grinding aid according to one of Claims 1 to 4, characterised in that methanol, ethanol, propanol, isopropanol, acetone and/or tetrahydrofuran is used as a polar solvent.

6. Grinding method employing the grinding aid according to one of Claims 1 to 5, characterised in that firstly an aqueous suspension of the minerals is prepared, after which the grinding aid and then the grinding bodies are added and the minerals are ground mechanically to the desired fineness.

7. Grinding method according to Claim 6, characterised in that the aqueous suspension of the minerals to be ground consists of at least 70% by weight of dry material.

8. Grinding method according to Claim 6 or 7, characterised in that the grinding aid is added in the form of the dry polymer fraction to the suspension in a ratio of 0.2 to 2% by weight relative to the quantity of minerals to be ground.

9. Grinding method according to one of Claims 6 to 8, characterised in that the grinding bodies have a granular size of 0.2 to 4 mm.

10. Grinding method according to one of Claims 6 to 9, characterised in that the grinding bodies consist of silicon oxide, aluminium oxide, zirconium oxide or their mixtures, steels or synthetic resins of considerable hardness.

11. Grinding method according to one of Claims 6 to 10, characterised in that the weight ratio between grinding bodies and minerals to be ground is at least 2 : 1.

12. Grinding method according to one of Claims 6 to 11, characterised in that the weight ratio between grinding bodies and the minerals to be ground is between 3 : 1 and 5 : 1.

13. Use of the grinding aid according to one of Claims 1 to 5 for the manufacture of pigments.

**Revendications**

1. Aide de broyage pour broyer des minéraux gros en solution aqueuse sous forme de polymères et/ou de copolymères neutralisés d'acide acrylique, d'acide itaconique, d'acide maléique ou d'acide fumarique, caractérisée en ce qu'elle consiste en la fraction de polymère ou de copolymère ayant une viscosité spécifique dans l'intervalle de 0,3–0,8, laquelle, après la fin de la polymérisation et de la neutralisation en milieu aqueux, est séparée de telle sorte qu'un solvant polaire est ajouté à la solution aqueuse, de sorte que la solution est partagée en deux phases, la phase moins dense, contenant la portion majeure du solvant polaire et les fractions indésirables de polymère et/ou de copolymère acryliques, est séparée, et la phase aqueuse plus dense, contenant la fraction désirée ayant la viscosité spécifique de 0,3–0,8, est recueillie.

2. Aide de broyage selon la revendication 1, caractérisée en ce qu'elle consiste en la fraction de polymère ou de copolymère ayant une viscosité spécifique dans l'intervalle de 0,35–0,60.

3. Aide de broyage selon la revendication 1 ou 2, caractérisée en ce qu'elle est une solution aqueuse.

4. Aide de broyage selon la revendication 1 ou 2, caractérisée en ce qu'elle est une poudre.

5. Aide de broyage selon l'une quelconque des revendications 1–4, caractérisée en ce qu'on utilise comme solvant polaire le méthanol, l'éthanol, le propanol, l'isopropanol, l'acétone, et/ou le tétrahydrofuran.

6. Méthode de broyage avec emploi de l'aide de broyage selon l'une quelconque des revendications 1–5, caractérisée en ce qu'on prépare premièrement une suspension aqueuse des minéraux, qu'on ajoute alors l'aide de broyage et ensuite les éléments broyeurs et qu'on broie les minéraux mécaniquement jusqu'à la finesse désirée.

7. Une méthode de broyage selon la revendication 6, caractérisée en ce que la suspension aqueuse des minéraux à broyer consiste au moins pour 70% en poids en matériau sec.

8. Une méthode de broyage selon la revendication 6 ou 7, caractérisée en ce que l'aide de broyage est ajoutée sous forme de la fraction de polymère sèche de la suspension dans une proportion de 0,2–2% en poids par rapport à la quantité des minéraux à broyer.

9. Une méthode de broyage selon l'une quelconque des revendications 6–8, caractérisée en ce que les éléments broyeurs possèdent une grosseur de grain de 0,2–4 mm.

10. Une méthode de broyage selon l'une quelconque des revendications 6–9, caractérisée en ce que les éléments broyeurs consistent en de l'oxyde de silicium, de l'oxyde d'aluminium, de l'oxyde de zirconium ou de ses mélanges, des aciers ou des résines synthétiques ayant une dureté élevée.

11. Une méthode de broyage selon l'une quelconque des revendications 6–10, caractérisée en ce que le rapport en poids entre les éléments broyeurs et les minéraux à broyer est au moins 2 : 1.

12. Une méthode de broyage selon l'une quelconque des revendications 6–11, caractérisée en ce que le rapport en poids entre les éléments broyeurs et les minéraux à broyer se situe entre 3 : 1 et 5 : 1.

13. Emploi de l'aide de broyage selon l'une quelconque des revendications 1–5 pour la production de pigments.